# EUROPÄISCHE PATENTANMELDUNG

(11) **EP 0 926 391 A2**
(43) Veröffentlichungstag der Anmeldung: **30.06.1999**
(21) Anmeldenummer: 98114915.6
(22) Anmeldetag: 08.08.1998
(51) Int. Cl.: F16F 15/16

(54) **Elastische Kupplung**

(30) Priorität: 14.11.1997 DE 19750408
(71) Anmelder: Voith Turbo GmbH & Co. KG, 89522 Heidenheim (DE)
(72) Erfinder: Hanke, Wolfgang, 89518 Heidenheim (DE); Hartleitner, Armin, 89446 Ziertheim (DE)
(74) Vertreter: Dr. Weitzel & Partner

(57) **Zusammenfassung**

Die Erfindung betrifft eine elastische Kupplung in Scheibenbauweise, insbesondere zum Einbau in den Antriebsstrang eines Kraftfahrzeuges zwischen einem Verbrennungsmotor und einem Getriebe, mit den folgenden Merkmalen:
eine erste Kupplungshälfte (1) umschließt mittels zweier am Außenumfang drehfest verbundener Seitenscheiben (7,8) eine zweite Kupplungshälfte (2), die durch mindestens eine einer Nabe (3) zugeordneten Scheibe (Mittelscheibe)(6) gebildet ist;
beide Kupplungshälften sind über elastische Kupplungselemente (9) miteinander verbunden und begrenzt gegeneinander verdrehbar;
die Seitenscheiben begrenzen einen die Mittelscheibe aufnehmenden flüssigkeitsdichten Innenraum (11), der mit einem Dämpfungsmedium gefüllt ist;
im Innenraum ist ein gegenüber den beiden Kupplungshälften jeweils begrenzt verdrehbarer, schwimmender Dämpfungsring vorgesehen;
der Dämpfungsring bildet mit der ersten Kupplungshälfte eine erste Verdrängungskammer (16) und mit der zweiten Kupplungshälfte wenigstens eine zweite Verdrängungskammer (17);
beide Verdrängungskammern sind im Volumen veränderlich;
die erste und die zweite Verdrängungskammer sind miteinander leitend verbunden.

## Beschreibung

Die Erfindung betrifft eine elastische Kupplung mit einer Dämpfungseinrichtung, insbesondere tur einen Kraftfahrzeug-Antrieb, gemäß dem Oberbegriff des Anspruches 1. Kupplungen dieser Art sollen beim Antrieb durch Brennkraftmaschinen die auftretenden Drehschwingungen vom nachfolgenden Antriebsstrang fernhalten. Eine besondere Rolle spielt dabei die Dämpfungsfähigkeit der üblicherweise am Motorschwungrad befestigten elastischen Kupplung in kritischen Betriebszuständen.

Die Erfindung geht aus von jener Kupplung, die beschrieben ist in DE 3 923 749 (= US 5 194 045). Dabei ist in dem mit Dämpfungsmedium gefüllten Innenraum der Kupplung ein sogenannter schwimmender Dämpfungsring angeordnet, der weder mit der einen, noch mit der anderen Kupplungshälfte in formschlüssiger Verbindung steht. Der schwimmende Dämpfungsring bildet mit der ersten Kupplungshälfte zumindest eine erste Verdrängungskammer und mit der zweiten Kupplungshälfte zumindest eine zweite Verdrängungskammer. Auf diese Weise ist dieser schwimmende Dämpfungsring dem freien Kräftespiel während der Relativbewegung der beiden Kupplungshälften ausgesetzt, wobei er gegenüber jeder der beiden Kupplungshälfte jeweils begrenzt verdrehbar ist. Unter Berücksichtigung der Eigenmasse des schwimmenden Dämpfungsringes sowie der zur Verfügung stehenden Spaltquerschnitte ist es somit möglich, daß bei kleinen Schwingungsamplituden nur die eine Verdrängungskammer zur Dämpfung wirksam wird.

Bei größeren Schwingungsamplituden, insbesondere auch bei niedrigerer Schwingungsfrequenz, kommt auch die zweite Verdrängungskammer zur Wirkung, nämlich wenn die begrenzte Verdrehbarkeit des schwimmenden Dämpfungsringes gegenüber der einen Kupplungshälfte ausgenützt und die Verdrehbarkeit gegenüber der anderen Kupplungshälfte noch zur Verfügung steht. Die Wahl zweier getrennter Verdrängungskammern an einem schwimmenden Dämpfungsring bringt den Vorteil mit sich, daß die Kupplung selbsttätig mit einer von den erregenden Schwingungsamplituden abhängigen Dämpfung der Drehschwingungen reagieren kann und auch bei Lastwechselvorgängen bessere Laufruhe bringt.

Diese Ausführung hat sich in der Praxis gut bewährt. Es kann jedoch bei niedrigeren Drehzahlen zu einem Betriebszustand kommen, bei welchem der schwimmende Dämpfungsring die von ihm verlangte Funktion nicht in der gewünschten Weise erfüllt.

US-5,573,460 beschreibt eine elastische Kupplung mit mehreren Merkmalen von Anspruch 1. Hierbei sind Verdrängungskammern miteinander leitend verbunden. Der Dämpfungsring ist dabei mi einemderbeiden Kupplungshälften fest verbunden. Mit der anderen Kupplungshälfte bildet er mehrere Verdrängungskammern.

Der Erfindung liegt die Aufgabe zugrunde, eine Kupplung gemäß dem Oberbegriff von Anspruch 1 derart zu gestalten, daß der schwimmende Dämpfungsring bei sämtlichen Betriebszuständen eine optimale Dämpfung entwickelt.

Diese Aufgabe wird durch die Merkmale von Anspruch 1 gelöst. Damit wird im einzelnen folgendes erreicht: Während einer Arbeitsphase wird aus einer zweiten Dämpfungskammer über die genannte leitende Verbindung einer ersten Dämpfungskammer Dämpfungsmedium zugeführt. Dadurch wird gewährleistet, daß die Dämpfungskammer in allen Betriebszuständen einen optimalen Füllungsgrad erreicht. Hierdurch wird die Wirksamkeit des Dämpfungsringes in bestimmungsgemäßer Weise gesteigert.

Wichtig ist folgendes: Sobald der schwimmende Dämpfungsring am Nocken der Mittelscheibe zum Anschlag kommt, so kommt es zu einem Absperren der leitenden Verbindung, und somit zu einem Ventilklappeneffekt. Deshalb ist es zweckmäßig, die beteiligten Flächen von Dämpfungsring und Nocken der Mittelscheibe entsprechend zu gestalten. Die Erfindung ist anhand der Zeichnung näher erläutert. Darin ist im einzelnen folgendes dargestellt:
- Fig. 1: ein schematischer Teil-Querschnitt durch die erfindungsgemäße Kupplung;
- Fig. 2: ein Längsschnitt durch den schwimmenden Dämpfungsring entlang der Schnittlinie II-II in Fig. 1;
- Fig. 3: ein Teil-Längsschnitt durch die Kupplung entlang der Linie III-III in Fig. 1;
- Fig. 4: ein Längsschnitt durch eine alternative Ausbildung des schwimmenden Dämpfungsringes ähnlich Fig. 2;
- Fig. 5: ein schematischer Teil-Querschnitt durch eine weitere Alternative des schwimmenden Dämpfungsringes;
- Fig. 6: eine Ansicht einer weiteren Ausführungsform eines schwimmenden Dämpfungsringes.

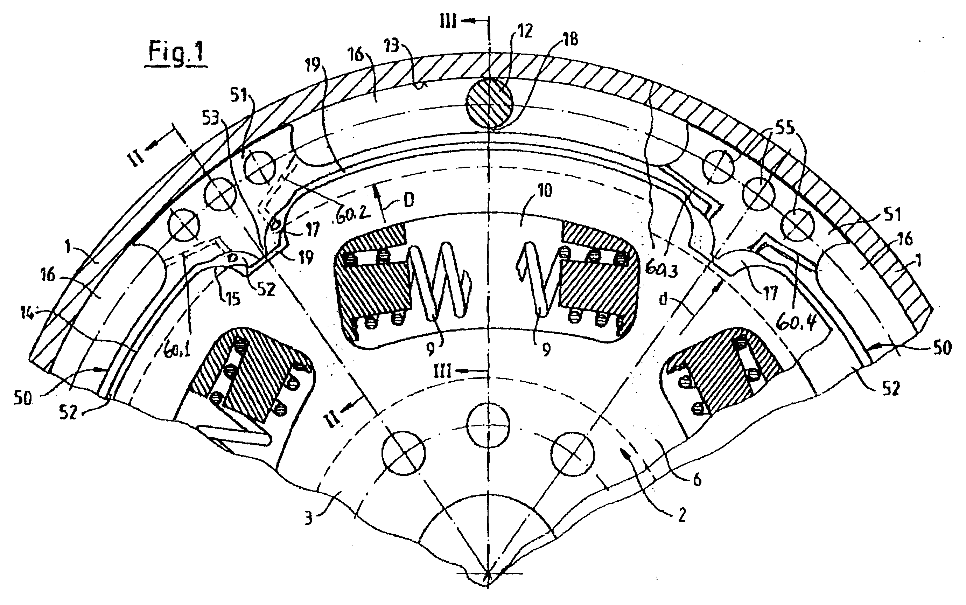

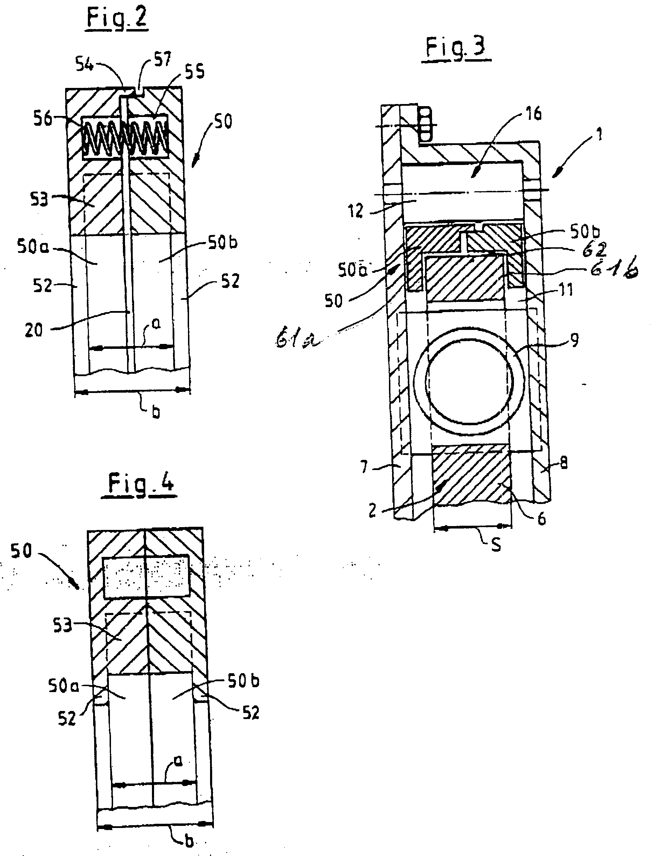

Die Figuren 1 und 3 zeigen schematische Schnitte durch die erfindungsgemäße Kupplung mit einer ersten Kupplungshälfte 1, die mit einer nicht dargestellten Antriebsmaschine verbunden ist. Eine zweite Kupplungshälfte 2 ist mit einem nicht dargestellten Getriebe eines Fahrzeugantriebes verbunden. Die erste Kupplungshälfte 1 umfaßt zwei Seitenscheiben 7, 8, die am äußeren Umfang verbunden sind und einen flüssigkeitsdichten Innenraum 11 bilden und die aus einer Mittelscheibe 6 und einer Nabe 3 bestehende zweite Kupplungshälfte in sich einschließen. Die Drehmomentübertragung zwischen den beiden Kupplungshälften erfolgt, wie bekannt, über tangential angeordnete Federn 9, die in entsprechenden Ausschnitten 10 in der Mittelscheibe 6 bzw. den Seitenscheiben 7 und 8 eingelegt sind. Zwischen dem äußeren Umfang 14 der Mittelscheibe 6 und dem radial äußeren Umfang des Innenraumes 13 befindet sich ein schwimmender Dämpfungsring 50. Dieser ist innerhalb der ersten Kupplungshälfte 1 drehbeweglich gelagert und sowohl gegenüber der ersten Kupplungshälfte 1 als auch der zweiten Kupplungshälfte 2, nämlich der Mittelscheibe 6, jeweils begrenzt verdrehbar geführt. Mit keiner der beiden Kupplungshälften 1, 2 steht er jedoch in formschlüssiger Verbindung. Der schwimmende Dämpfungsring 50 bildet dagegen sowohl mit der ersten Kupplungshälfte 1 eine erste Verdrängungskammer 16 und mit der zweiten Kupplungshälfte, nämlich der Mittelscheibe 6, eine zweite Verdrängungskammer 17. Dazu weist der schwimmende Dämpfungsring 50 am äußeren Umfang mehrere Nocken 51 auf, die mit axial angeordneten Bolzen 12 zwischen den beiden Seitenscheiben 7, 8 die ersten Verdrängungskammern 16 begrenzen. Zur Bildung der zweiten Verdrängungskammern ist der schwimmende Dämpfungsring mit adial nach innen weisenden Vorsprüngen 53 versehen, die in entsprechende Einbuchtungen 15 an der Mittelscheibe eintauchen. Die beiden Verdrängungskammern 16 und 17 sind unterschiedlich groß ausgebildet, nämlich die erste Verdrängungskammer 16 erstreckt sich über einen großen Verdrehwinkel zwischen dem Nocken 51 und dem Bolzen 12, bei dessen Überwindung der schwimmende Dämpfungsring das in dem Innenraum 11 befindliche Dämpfungsmedium durch einen Spalt 18 zwischen dem Bolzen 12 und dem schwimmenden Dämpfungsring 50 verdrängen muß. Die Verdrängung von Dämpfungsmedium in der zweiten Verdrängungskammer 17 erfolgt durch Spalte 61a, 61b und 62 zwischen dem schwimmenden Dämpfungsring und der Mittelscheibe - siehe Figur 3.

Wie aus Figur 1 ersichtlich, befindet sich zwischen den Verdrängungskammern 16 und 17 jeweils ein Verbindungskanal - siehe die Kanäle 60.1, 60.2 im linken Teil der Figur und 60.3, 60.4 im rechten Teil der Figur.

Diese Kanäle bewirken, daß in jener Dämpfungskammer, die gerade zum Einsatz gelangt, ausreichend Dämpfungsmedium sofort verfügbar ist.

Wie man aus Figur 3 erkennen kann, schließt der schwimmende Dämpfungsring 50 die Mittelscheibe 6 zwischen sich ein, wobei radial nach innen weisende Seitenteile 52 einen teilweisen seitlichen Abschluß für die zweiten Verdrängungskammern 17 bilden. Die relative Verdrehbarkeit des schwimmenden Dämpfungsringes 50 gegenüber der Mittelscheibe 6 wird begrenzt durch die Vorsprünge 53 und den Flanken der Ausbuchtungen 15.

Im beschriebenen Ausführungsbeispiel ist vorgesehen, daß der Verdrehwinkel des schwimmenden Dämpfungsringes innerhalb der ersten Verdrängungskammern 16 viel größer ist als in den zweiten Verdrängungskammern 17. Gleichzeitig sind die Spalte 18 innerhalb der ersten Verdrängungskammern 16 deutlich enger gehalten als die Spalte 19 in den zweiten Verdrängungskammern 17. Auf diese Weise können den beiden Verdrängungskammern unterschiedliche Dämpfungseigenschaften zugewiesen werden. Im vorliegenden Falle also ist die Wahl so getroffen, daß die zweiten Verdrängungskammern die Dämpfung von Schwingungen kleiner Amplituden übernimmt und dabei aufgrund der großen Radial- und Axialspalte 19 eine nur schwache Dämpfung entwickelt. Dabei aber ist der schwimmende Dämpfungsring 50 aufgrund der engen Spalte 18 in den ersten Verdrängungskammern 16 schwingungsmäßig der ersten Kupplungshälfte 1 zugeordnet, weil die ersten Verdrängungskammern 16 gegenüber dem schwimmenden Dämpfungsring einen vergleichsweise hohen Verdrehwiderstand entgegensetzen. Bei Schwingungen mit kleinen Amplituden und insbesondere höherer Frequenz sind somit in erster Linie die zweiten Verdrängungskammern 17 wirksam. Bei Schwingungen mit größeren Amplituden, also insbesondere beim Durchfahren kritischer Drehzahlen, wird der Verdrehwinkel innerhalb der zweiten Verdrängungskammer 17 sofort überwunden, so daß die Vorsprünge 53 an den Einbuchtungen 15 anliegen und eine formschlüssige Mitnahme des schwimmenden Dämpfungsringes mit der Mittelscheibe 6 eintritt. Auf diese Weise entsteht die Verdrängung von Dämpfungsmedium durch die Spalte 18 in den ersten Verdrängungskammern 16 und damit eine starke Dämpfung für Schwingungen mit großen Amplituden. Durch diese wechselweise Zuordnung des schwimmenden Dämpfungsringes zu einer der beiden Kupplungshälften, je nachdem, ob es sich um Schwingungen kleiner oder großer Amplituden handelt, ist eine auf die jeweilige Schwingungsform zugeschnittene Dämpfung erzielbar. Eine Anpassung an verschiedene Betriebszustände, insbesondere an das typische Schwingungsverhalten einer bestimmten Antriebsmaschine, ist durch geeignete Wahl der Verdrehwinkel innerhalb der beiden Verdrängungskammern möglich sowie durch geeignete Wahl der Spalte 18 und 19.

Im rechten Teil der Figur 1 ist, wie erwähnt, eine alternative Ausbildung der zweiten Verdrängungskammer 17 dargestellt. Die Seitenteile 52 des schwimmenden Dämpfungsringes ragen dabei wesentlich weiter nach radial innen als die Ausbuchtungen 15 in der Mittelscheibe 6. Dadurch wird vor allem erreicht, daß sich die Vorsprünge 53 am schwimmenden Dämpfungsring 50 nach Überwindung des Verdrehwinkels in der zweiten Verdrängungskammer 17 besser gedämpft an die Flanken der Ausbuchtungen 15 anlegen. Die Seitenteile 52 weisen dazu einen kleinsten Durchmesser d auf, während auf der linken Seite der Figur 1 die Seitenteile 52 den kleinsten Durchmesser D aufweisen.

Aus den Figuren 2 und 4 ist zu erkennen, daß der schwimmende Dämpfungring 50 axial in zwei Hälften 50a und 50b geteilt ist. Die beiden Hälften 50a und 50b weisen darüber hinaus axiale Bohrungen 55 auf, in denen Federelemente 56 eingelegt sind. Diese Federn 56 spreizen die beiden Hälften 50a und 50b in axialer Richtung gegen die Innenseiten der Seitenscheiben 7, 8. Dadurch entsteht eine zusätzliche Reibdämpfung zwischen dem schwimmenden Dämpfungsring und der ersten Kupplungshälfte 1. Durch Fliehkraft entsteht darüber hinaus zwischen den beiden Hälften 50a und 50b ein Innendruck, der die Wirkung der Federn 56 noch weiter unterstützt. Es kann gemäß Figur 2 eine labyrinthähnliche Zentrierung vorgesehen sein, wobei ein Außenring 54 an der einen Hälfte 50a elastisch ausgebildet sein kann, insbesondere, wenn der schwimmende Dämpfungsring aus Kunststoff hergestellt ist. Zwischen den beiden Hälften 50a und 50b ist ein Spalt 20 vorhanden, durch den Dämpfungsmedium von einer Verdrängungskammer zur anderen übertreten kann, wobei die Dimensionierung dieses Spaltes auch der Optimierung der Dämpfungsfähigkeit der Kupplung dienen kann.

Der radial äußere Spalt zwischen dem Nocken 51 und der inneren Oberfläche 13 des Innenraumes 11 wird vorteilhaft so gewählt, daß eine dichtende Berührung gerade bei Erreichen der Betriebstemperatur der Kupplung eintritt. Dadurch ist die Dämpfung bei kühlerem Dämpfungsmedium und noch großem Spalt etwa so groß wie bei kleinerem Spalt und dünnflüssigerem Dämpfungsmedium. Temperatureinflüsse werden dadurch kompensiert. Dasselbe gilt auch für die Bemessung des Spaltes 18. Dieselbe Temperaturkompensation tritt an der zweiten Verdrängungskammer 17 ein, bei der sich die Spalte 19 mit steigener Temperatur vergrößert.

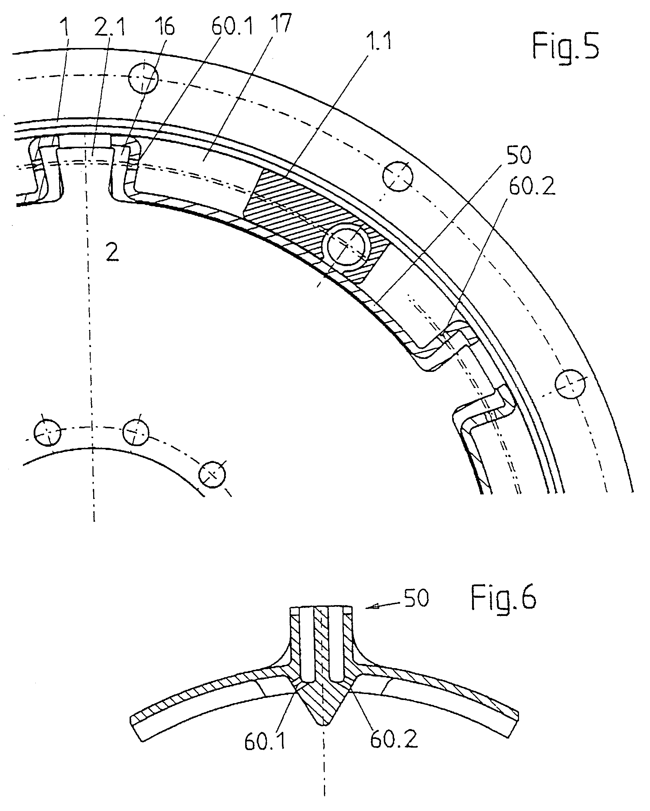

Bei der in Figur 5 dargestellten Ausführungsform erkennt man wiederum eine erste Kupplungshälfte 1 und eine zweite Kupplungshälfte 2 als entscheidende Bauteile.

Der schwimmende Dämpfungsring 50 ist hierbei von relativ einfachem Aufbau. Er ist nämlich ausgebildet als ein Ring von gleichmäßiger Stärke. An seinen beiden Enden ist er abgekröpft.

Man erkennt eine erste Dämpfungskammer 16, die zwischen einem Ende des schwimmenden Dämpfungsringes 50 und einem Nocken 2.1 der zweiten Kupplungshälfte 2 gebildet ist, ferner eine Dämpfungskammer 17, die zwischen dem genannten Ende des Dämpfungsringes 50 und einem Nocken 1.1 gebildet ist. Nocken 1.1 ist Bestandteil der ersten Kupplungshälfte 1.

Entscheidend sind die erfindungsgemäßen Bohrungen jeweils in den abgekröpften Enden des schwimmenden Dämpfungsringes 50. Siehe die Bohrungen 60.1 und 60.2.

Der schwimmende Dämpfungsring 50 gemäß Figur 6 hat im wesentlichen die Gestalt eines Kleiderbügels. Auch hier sieht man wiederum Bohrungen 60.1 und 60.2. Jede dieser Bohrungen stellt eine leitende Verbindung zweier Verdrängungskammern dar, nämlich der einen Verdrängungskammer, die zwischen der ersten Kupplungshälfte (hier nicht dargestellt) und dem schwimmenden Dämpfungsring 50 gebildet ist, und einer zweiten Dämpfungskammer, die zwischen der zweiten Verdrängungskammer (nicht dargestellt) und dem schwimmenden Dämpfungsring 50 gebildet ist.

## Patentansprüche

1. Elastische Kupplung in Scheibenbauweise, insbesondere zum Einbau in den Antriebsstrang eines Kraftfahrzeuges zwischen einem Verbrennungsmotor und einem Getriebe, mit den folgenden Merkmalen:
1.1 eine erste Kupplungshälfte (1) umschließt mittels zweier am Außenumfang drehfest verbundener Seitenscheiben (7, 8) eine zweite Kupplungshälfte (2), die durch mindestens eine einer Nabe (3) zugeordneten Scheibe (Mittelscheibe 6) gebildet ist;
1.2 beide Kupplungshälften (1, 2) sind über elastische Kupplungselemente (9) miteinander verbunden und begrenzt gegeneinander verdrehbar;
1.3 die Seitenscheiben (7, 8) begrenzen einen die Mittelscheibe (6) aufnehmenden flüssigkeitsdichten Innenraum (11), der mit einem Dämpfungsmedium gefüllt ist;
1.4 im Innenraum (11) ist ein gegenüber den beiden Kupplungshälften (1, 2) jeweils begrenzt verdrehbarer, schwimmender Dämpfungsring vorgesehen;
1.5 der Dämpfungsring (50) bildet mit der ersten Kupplungshälfte (1) eine erste Verdrängungskammer (16) und mit der zweiten Kupplungshälfte (2) wenigstens eine zweite Verdrängungskammer (17);
1.6 beide Verdrängungskammern (16, 17) sind im Volumen veränderlich;
1.7 die erste und die zweite Verdrängungskammer (16, 17) sind miteinander leitend verbunden.

2. Kupplung nach Anspruch 1, dadurch gekennzeichnet, daß zum Herstellen der leitenden Verbindungen jeweils ein Kanal (60.1, 60.2, 60.3, 60.4) vorgesehen ist, der durch den Dämpfungsring (50) selbst hindurchgeführt ist.
